# EUROPEAN PATENT APPLICATION

(11) **EP 1 333 678 A2**
(43) Date of publication of application: **06.08.2003**
(21) Application number: 03001881.6
(22) Date of filing: 29.01.2003
(51) Int. Cl.: H04N 7/24, H04N 5/00

(54) **Computer apparatus and system configuration method**

(30) Priority: 30.01.2002 JP 2002022183
(71) Applicant: Kabushiki Kaisha Toshiba, Minato-ku, Tokyo 105 (JP)
(72) Inventor: Ishibashi, Yasuhiro, c/o K.K. Toshiba, Tokyo 105-8001 (JP); Tezuka, Koji, c/o Kabushiki Kaisha Toshiba, Tokyo 105-8001 (JP)
(74) Representative: Henkel, Feiler, Hänzel

(57) **Abstract**

A CPU (11) which performs video processing, and a network processor (31) which performs network processing share a PCI bus (10). Video data (MPEG2 data) is transmitted to a wireless LAN (36) via the PCI bus (10).

## Description

The present invention relates to a computer apparatus having a plurality of processors with different-processing functions.

The present invention also relates to a system configuration method suitable for realizing a series of processing functions of transferring processing data between a plurality of processors with different processing functions.

In general personal computers, a network device, or a video device, such as a TV tuner, are connected using an interface such as a wired LAN (Ethernet), USB, or IEEE 1394.

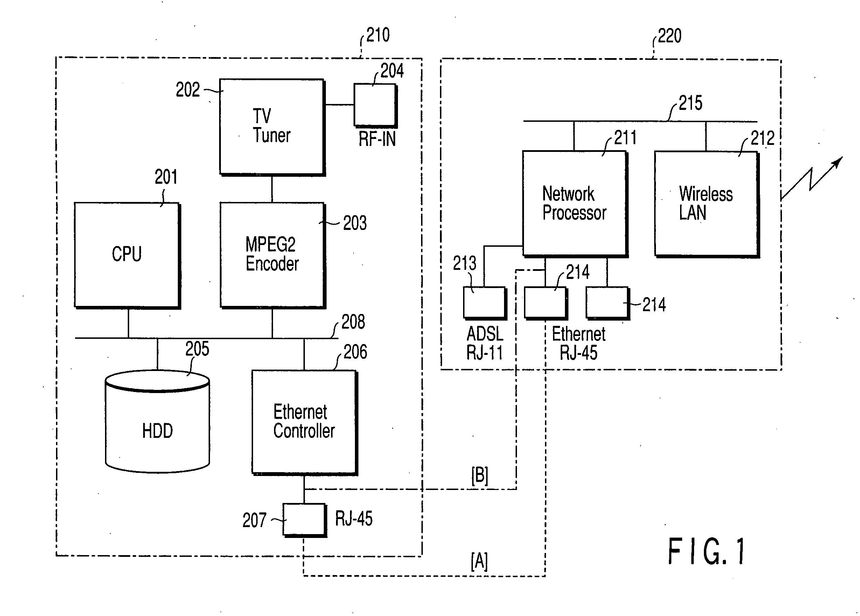

A connection configuration example of these devices is shown in FIG. 1. A video device 210 comprises a CPU 201, TV tuner 202, MPEG2 encoder 203, antenna terminal (RF-IN) 204, external memory (HDD) 205, Ethernet controller 206, Ethernet connector (RJ-45) 207, and internal bus 208. A network device 220 comprises a network processor 211, wireless LAN 212, ADSL connector (RJ-11) 213, Ethernet connector (RJ-45) 214, and internal bus 215.

[A] illustrates a connection circuit when the network device 220 is externally connected to the video device 210. [B] illustrates a connection circuit when the video device 210 and network device 220 are arranged in a single apparatus.

In the prior art, the video device 210 and network device 220 are connected using an interface such as Ethernet, USB, or IEEE 1394. An Ethernet controller, USB or IEEE 1394 controller, or the like must be interposed between the internal bus 208 of the video device 210 and the internal bus 215 of the network device 220. Connection between these devices requires a hardware controller and firmware for controlling the controller. This makes the system configuration complicated and bulky.

In this system configuration, video data (MPEG2 data) processed in the video device 210 is sent to the network device 220 via the controller in only one. direction. For example, in real-time wireless transmission of the video data, the wireless transmission band varies over a specific range due to an external factor. If the transmission band becomes too narrow, some video data is lost during transmission, losing the real-time property.

It is an object of the present invention to provide a computer apparatus and system configuration method capable of simplifying and downsizing the system configuration.

In an aspect of the present invention, there is provided a computer apparatus having a plurality of processors, comprising: an internal bus; a plurality of processors which are connected to the internal bus and share the internal bus; and a plurality of peripheral devices which are connected to the internal bus and subordinate to the respective processors, wherein communication between the plurality of peripheral devices and communication between the plurality of processors is performed via the internal bus.

In another aspect of the invention, there is provided a communication control method in a computer apparatus having an internal bus, a plurality of processors which are connected to the internal bus and share the internal bus, and a plurality of peripheral devices which are connected to the internal bus and subordinate to the respective processors, comprising: executing communication between the plurality of peripheral devices via the internal bus; and executing communication between the plurality of processors via the internal bus.

In still another aspect of the invention, there is provided a system configuration method comprising: connecting a plurality of processors and a plurality of peripheral devices subordinate to the respective processors to an internal bus shared between the plurality of processors; performing communication between the plurality of processors and the plurality of peripheral devices via the internal bus; and performing communication between the plurality of processors via the internal bus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a conventional system configuration;
FIG. 2 is a block diagram showing a system configuration according to an embodiment of the present invention; and
FIG. 3 is a flow chart showing communication processing procedures between main parts in the embodiment.

A preferred embodiment of the present invention will be described below with reference to the several views of the accompanying drawing.

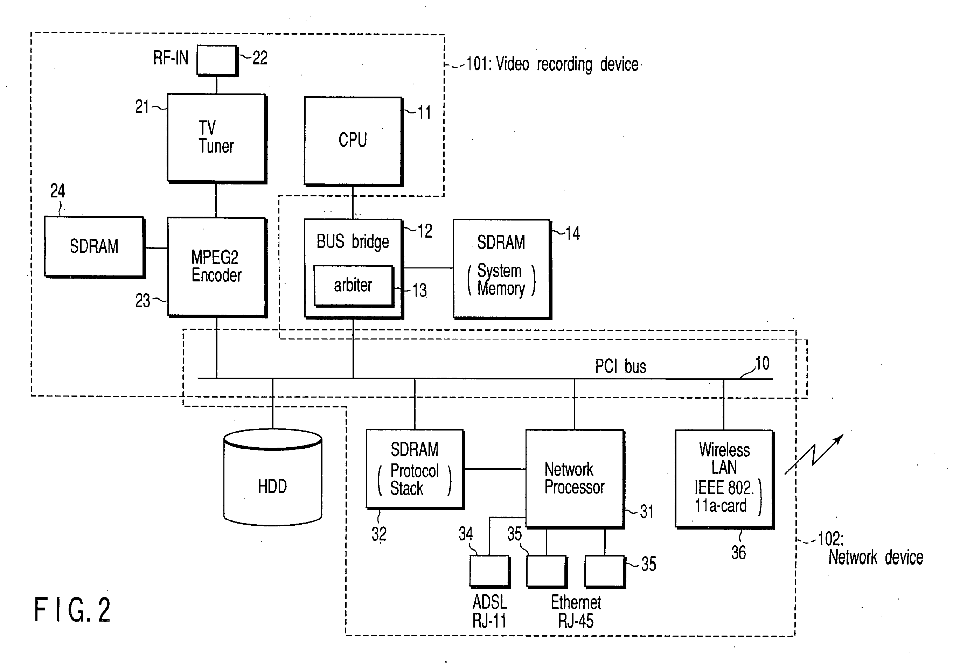

FIG. 2 is a block diagram showing the configuration of an information processing apparatus in the embodiment of the present invention. In FIG. 2, a personal computer having a function of wirelessly transmitting video data is shown as an example of the information processing apparatus.

The personal computer shown in FIG. 2 comprises a PCI bus 10, CPU 11, bus bridge 12, bus arbiter 13, main memory (SDRAM (system memory)) 14, external memory (HDD) 15, TV tuner 21, antenna terminal (RF-IN) 22, MPEG2 encoder 23, work memory (SDRAM) 24, network processor 31, work memory (SDRAM (protocol stack)) 32, ADSL connector (RJ-11) 34, Ethernet connector (RJ-45) 35, and wireless communication device (wireless LAN (IEEE 802.11a-card)) 36.

The PCI bus 10 is an internal bus for the personal computer system. The CPU 11 controls the personal computer system.

The bus bridge 12 and bus arbiter 13 manage the PCI bus 10. The TV tuner 21, antenna terminal 22, MPEG2 encoder 23, and work memory (SDRAM) 24 are components of a peripheral device (in this embodiment, a video device) subordinate to the CPU 11. The work memory (SDRAM) 24 stores data for video processing. The network processor 31 controls communication. The work memory (SDRAM) 32, ADSL connector 34, Ethernet connector 35, and wireless communication device (wireless LAN (IEEE 802.11a-card)) 36 are components of a peripheral device (in this embodiment, a network device) subordinate to the network processor 31. The work memory (SDRAM (protocol stack)) 32 stores data for communication processing.

The CPU 11, MPEG2 encoder 23, network processor 31, and wireless communication device 36 are connected to the PCI bus 10 serving as an internal bus shared between the processors (CPU 11 and network processor 31). Communication between the CPU 11 and the network processor 31, communication between the CPU 11 and the MPEG2 encoder 23 serving as a subordinate device, and communication between the network processor 31 and the wireless communication device 36 serving as a subordinate device are performed on the PCI bus 10 under the management (arbitration) of the bus arbiter 13.

The CPU 11 controls the TV tuner 21, MPEG2 encoder 23, external memory (HDD) 15, and the like. For example, the CPU 11 stores, in the external memory (HDD) 15, video data (MPEG2 data) generated by the MPEG2 encoder 23 on the basis of a signal received by the TV tuner 21.

The TV tuner 21 receives TV radio waves from the antenna terminal (RF-IN) 22. The TV tuner 21 transmits a video signal and audio signal contained in the radio waves to the MPEG2 encoder 23.

The MPEG2 encoder 23 generates MPEG2 data complying with the video signal and audio signal from the TV tuner 21 by using the work memory (SDRAM) 24 under the control of the CPU 11.

In this embodiment, a video device serving as a peripheral device subordinate to the CPU 11 comprises the TV tuner 21, antenna terminal 22, MPEG2 encoder 23, work memory 24, and the like constitute. A video recording device 101 comprises the CPU 11, the components (TV tuner 21, antenna terminal 22, MPEG2 encoder 23, and work memory 24) of the video device, the external memory 15, and the PCI bus 10.

The network processor 31 is comprised of the ADSL connector 34, the Ethernet connector 35, and the work memory 32 which provides a protocol stack. The network processor 31 controls ADSL communication, Ethernet communication, and communication of the wireless communication device 36.

The wireless communication device 36 is a peripheral device subordinate to the network processor 31. In this embodiment, the wireless communication device 36 is exemplified by a wireless LAN card detachable from a card slot. The wireless communication device 36 will be called a wireless LAN 36 hereinafter. The wireless LAN 36 is used as an access point, and wirelessly forms a LAN with a client machine. The ADSL connector (RJ-11) 34 is used in connection with a telephone line. The Ethernet connector (RJ-45) 35 is used in connection with the LAN.

A network device 102 is comprised of the network processor 31, work memory 32, ADSL connector 34, Ethernet connector 35, wireless LAN 36, and PCI bus 10.

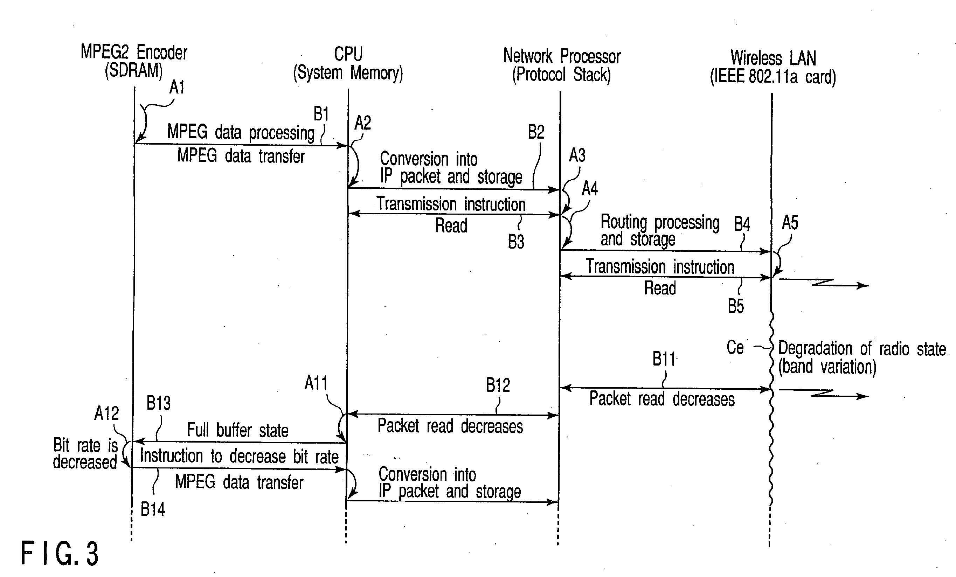

FIG. 3 is a flow chart showing the processing procedures of flow control in the embodiment.

The operation of the embodiment of the present invention will be explained with reference to FIGS. 2 and 3.

In processing of the video recording device 101, the MPEG2 encoder 23 generates video data (MPEG2 data) on the basis of a signal received by the TV tuner 21 under the control of the CPU 11. The MPEG2 data is stored in the external memory 15 via the PCI bus 10.

In processing of the network device 102, the MPEG2 data stored in the external memory (HDD) 15 is wirelessly transmitted to an external device via the wireless LAN 36 in accordance with a protocol stack stored in the work memory 32 under the control of the network processor 31.

In this way, the CPU 11 and network processor 31 share the PCI bus 10. Video data (MPEG2 data) is sent via the PCI bus 10 to the wireless LAN 36, which wirelessly transmits the video data.

At this time, MPEG2 data is transferred under flow control between the CPU 11 and the network processor 31. The flow control will be described later with reference to FIG. 3.

The use of the PCI bus 10 for processes in the video recording device 101 and network device 102 is managed by the arbitration of the bus arbiter 13 in the bus bridge 12. The use management of the PCI bus 10 means the use management of the PCI bus 10 for processing executed under the control of the CPU 11 and processing executed under the control of the network processor 31.

The data transfer speed of the PCI bus 10 for processes in the video recording device 101 and network device 102 is 133 MB/sec at maximum in the use of a 33-MHz clock.

Data flows to the PCI bus 10 in the video recording device 101 are data transfer between the CPU 11 and the MPEG2 encoder 23, data transfer from the MPEG2 encoder 23 to the CPU 11, data transfer from the MPEG2 encoder 23 to the external memory 15, and data transfer between the CPU 11 and the external memory 15. These data transfer speeds are several MB/sec at most, and the bus occupation ratio of the PCI bus 10 is 10% or less.

A data flow to the PCI bus 10 in the network device 102 is between the network processor 31 and the wireless LAN 36. The PCI bus 10 is used by data transfer between the ADSL and the wireless LAN and data transfer between Ethernet and the wireless LAN. The data transfer speed between the network processor 31 and the wireless LAN 36 is several MB/sec, and the occupation ratio of the PCI bus 10 is 10% or less. This occupation ratio is equal to that in the video recording device 101. The data transfer speed using the PCI bus 10 between the video recording device 101 and the network device 102 is also several MB/sec.

Hence, processing of the video recording device 101 under the control of the CPU 11 and processing of the network device 102 under the control of the network processor 31 can be satisfactorily executed on one PCI bus 10. The bus occupation ratio of the PCI bus 10 in each of the video recording device 101 and network device 102 is 10% or less. Data transfer between the video recording device 101 and the network device 102 does not degrade the performance of these devices. This allows constituting a composite apparatus in which the video recording device 101 and network device 102 share one internal bus (PCI bus 10).

As an example of using data transfer from the video recording device 101 to the network device 102, video data (MPEG2 data) recorded in the external memory 15 is transferred to a client through the network device 102 by wire (via the Ethernet connector 35) or wirelessly (via the wireless LAN 36). The image can be seen in the client.

As another example, an image received by the TV tuner 21 is converted into MPEG2 data by the MPEG2 encoder 23, and the MPEG2 data is transmitted to the client in real time through the network device 102. The client can provide a TV broadcast as a real-time image.

A transfer processing operation of video data (MPEG2 data) under flow control between the video recording device 101 and the network device 102 will be explained with reference to FIG. 3. In FIG. 3, video data (MPEG2 data) generated by the video device is wirelessly transmitted via the wireless LAN 36 in real time. In this flow control, the receiving device notifies the transmitting device of the memory capacity of the reception buffer, and the transmitting device obtains the state of the receiving device and transmits a proper amount of data. As an example of the flow control, FIG. 3 shows a sliding window method of dynamically managing the free state of the reception buffer and notifying the transmitting device of the free state.

Under the control of the CPU 11, the MPEG2 encoder 23 generates video data (MPEG2 data). based on a signal received by the TV tuner 21 (step A1 in FIG. 3), and transmits the MPEG2 data to the CPU 11 (step B1 in FIG. 3).

The CPU 11 converts the MPEG2 data received by the MPEG2 encoder 23 into an IP packet, and stores the IP packet in the buffer area of the main memory 14 (to be referred to as the buffer of the system memory 14 hereinafter) (step A2 in FIG. 3). The CPU 11 issues a transmission instruction to the network processor 31 (step B2 in FIG. 3).

Upon reception of the transmission instruction from the CPU 11 (step A3 in FIG. 3), the network processor 31 reads out the MPEG2 data converted into the IP packet stored in the buffer of the system memory 14 (step B3 in FIG. 3). The network processor 31 executes routing processing of determining a data transmission path, and stores the IP packet in the buffer area of the work memory (protocol stack) 32 (to be referred to as the buffer of the protocol stack 32 hereinafter) (step A4 in FIG. 3). The network processor 31 issues a transmission instruction to the wireless LAN 36 (step B4 in FIG. 3).

Upon reception of the transmission instruction from the network processor 31 (step A5 in FIG. 3), the wireless LAN 36 reads out the MPEG2 data converted into the IP packet stored in the buffer of the protocol stack 32 (step B5 in FIG. 3). The wireless LAN 36 transmits the MPEG2 data to an external wireless device by radio communication.

This processing is repetitively executed to transmit video data (MPEG2 data) complying with a video signal received by the TV tuner 21 to the external wireless device via the wireless LAN 36 in real time.

In the above-described processing, processes in steps B1 to B5 shown in FIG. 3, and processes in steps B11 to B14 to be described later are performed via the PCI bus 10.

The above processing is wireless data transmission processing of video data (MPEG2 data) in an environment (radio state) where a specific transmission band is ensured without any degradation in radio state in the radio frequency band of the wireless LAN 36.

Wireless data transmission processing of video data (MPEG2 data) when the radio state degrades and a specific transmission band cannot be ensured will be explained.

If the radio state degrades in wireless data transmission of video data (MPEG2 data) in the network device 102 and the transmission band of the network device 102 becomes much narrower than a specific transmission band, it becomes difficult to normally transmit data by the wireless LAN 36. Along with this, read of an IP packet from the buffer of the protocol stack 32 becomes slow. That is, the read interval of an IP packet from the buffer of the protocol stack 32 is prolonged (step B11 in FIG. 3).

The network processor 31 reads out MPEG2 data converted into an IP packet stored in the buffer of the system memory (14), and stores the MPEG2 data in the buffer of the protocol stack 32. Since data read from the wireless LAN 36 is slow (read interval is long), the buffer of the protocol stack 32 decreases its free area and becomes full. As the buffer of the protocol stack 32 becomes full, read to the buffer of the system memory 14 becomes slow (step B12 in FIG. 3).

The CPU 11 converts video data (MPEG2 data) sent from the MPEG2 encoder 23 into an IP packet, and stores the IP packet in the buffer of the system memory 14. However, the buffer of the system memory 14 becomes full owing to slow read from the network processor 31. If the CPU 11 recognizes the full buffer state of the system memory 14 (step A11 in FIG. 3), the CPU 11 instructs the MPEG2 encoder 23 to decrease the bit rate of a data stream (step B13 in FIG. 3).

The MPEG2 encoder 23 decreases the bit rate and generates MPEG2 data in accordance with the instruction from the CPU 11 (step A12 in FIG. 3). The MPEG2 encoder 23 transfers the MPEG2 data to the buffer of the system memory 14 (step B14 in FIG. 3).

In this manner, when normal transmission band cannot be ensured, the bit rate of MPEG2 data is decreased to maintain real-time transmission of video data. This can prevent omission of an image due to radio interference when a TV image is watched in real time.

The video recording device 101 and network device 102 share the PCI bus 10 in the above embodiment, but the present invention is not limited to this. The present invention can also be applied to a computer system with another processing function that comprises a plurality of processors for performing different processes. Also, the present invention is not limited to the above described embodiment.

As has been described in detail above, according to this embodiment, no controller need be interposed between a plurality of types of functional devices having processors which perform different processes, e.g., between a video device and a network device. The system configuration can therefore be simplified and downsized, constructing an economical composite system. Also, fine communication control can be achieved between functional devices.

## Claims

1. A computer apparatus having a plurality of processors, **characterized by** comprising:
an internal bus (10);
a plurality of processors (11,31) which are connected to the internal bus (10) and share the internal bus (10); and
a plurality of peripheral devices (101,102) which are connected to the internal bus (10) and subordinate to the respective processors (11,31),
wherein communication between the plurality of peripheral devices (101,102) and communication between the plurality of processors (11,31) is performed via the internal bus (10).

2. An apparatus according to claim 1, **characterized in that**
the plurality of processors (11,31) include a first processor (11) which controls a whole system, and a second processor (31) which is independent of the first processor and executes specific processing,
the peripheral devices (101,102) include a first peripheral device (101) subordinate to the first processor (11), and a second peripheral device (102) subordinate to the second processor (31),
the internal bus (10) connects the first and second processors (11,31), connects the first processor (11) and the first peripheral device (101), connects the second processor (31) and the second peripheral device (102), and is shared between the first and second processors (101,102), and
the first and second processors (11,31) execute communication between the first and second processors (11,31), between the first processor (11) and the first peripheral device (101), and between the second processor (31) and the second peripheral device (102) via the internal bus (10).

3. An apparatus according to claim 1, **characterized in that**
the plurality of processors (11,31) include first and second processors (11,31),
the peripheral devices (101,102) include a video device (101) subordinate to the first processor (11), and a network device (102) subordinate to the second processor (31),
the internal bus (10) connects the first and second processors (11,31), connects the first processor (11) and the video device (101), connects the second processor (31) and the network device (102), and is shared between the first and second processors (11,31), and
video data processed by the video device (101)is transmitted between the first and second processors (11,31) by flow control, and the transmitted data is transmitted to an external device via the network device (102).

4. An apparatus according to claim 3, **characterized in that** the first processor (11) variably controls a bit rate of the video data output from the video device (101) in accordance with a radio state of a radio transmission band of the network device (102) on the basis of the flow control.

5. An apparatus according to claim 4, **characterized in that** the first processor (11) is connected to a system memory (14) which stores the video data to be transmitted to the second processor (31), and the first processor (11) variably controls the bit rate of the video data output from the system memory (14) in accordance with a state of the system memory (14).

6. An apparatus according to claim 3, **characterized in that**
the first processor (11) is connected to a system memory (14) which stores the video data,
the video device (101) comprises
a receiver (21) which receives radio waves from an external terminal,
an encoder (23) which encodes a video signal received by the receiver (21) and transfers the encoded video data via the internal bus (10), and
a memory device (15) which stores the video data transferred from the encoder (23) via the internal bus (10), and wherein
the video data stored in the memory device (15) is transferred to the system memory (14) via the internal bus (10), and
the first processor (11) variably controls a bit rate of the video data output from the system memory (14) in accordance with a state of the system memory (14).

7. An apparatus according to claim 3, **characterized in that**
the first processor (11) is connected to a system memory (14) which stores the video data,
the video device (101) comprises
a receiver (21) which receives radio waves from an external terminal,
an encoder (23) which encodes a video signal received by the receiver (21) and transfers the encoded video data via the internal bus (10), and
a memory device (15) which stores the video data transferred from the encoder (23) via the internal bus (10), and wherein
the video data encoded by the encoder (23) is transferred in real time to the system memory (14) via the internal bus (10), and
the first processor (11) variably controls a bit rate of the video data output from the system memory (14) in accordance with a state of the system memory (14).

8. An apparatus according to claim 3, **characterized in that**
the second processor (31) is connected to a protocol stack memory (32),
the network device (102) comprises a radio communication device (36), and
the second processor (31) reads out, via the internal bus (10), video data stored in the video device (102), stores the video data in the protocol stack memory (32), and transfers the video data to the radio communication device (36) via the internal bus (10).

9. An apparatus according to claim 3, **characterized in that**
the second processor (31) is connected to a protocol stack memory (32),
the network device (102) comprises a radio communication device (36),
the second processor (31) reads out, via the internal bus (31), video data stored in the video device (101), stores the video data in the protocol stack memory (32), and transfers the video data to the radio communication device (36) via the internal bus (10), and
the first processor (11) is connected to a system memory (14) which stores the video data to be transmitted to the second processor (31), and the first processor (11) variably controls a bit rate of the video data output from the system memory (14) to the second processor (31) via the internal bus (10) in accordance with a state of the system memory (14).

10. A communication control method in a computer apparatus having an internal bus (10), a plurality of processors (11,31) which are connected to the internal bus (10) and share the internal bus (10), and a plurality of peripheral devices (101,102) which are connected to the internal bus (10) and subordinate to the respective processors (11,31), comprising:
executing communication between the plurality of peripheral devices (101,102) via the internal bus (10); and
executing communication between the plurality of processors (11,31) via the internal bus (10).

11. A method according to claim 10, **characterized in that**
the plurality of processors (11,31) comprise a first processor (11) which controls a whole system, and a second processor (31) which is independent of the first processor (11) and executes specific processing,
the peripheral devices (101,102) comprise a first peripheral device (101) subordinate to the first processor (11), and a second peripheral device (102) subordinate to the second processor (31),
the internal bus (10) connects the first and second processors (11,31), connects the first processor (11) and the first peripheral device (101), connects the second processor (31) and the second peripheral device (102), and is shared between the first and second processors (11,31), and
the first and second processors (11,31) execute communication between the first and second processors (11,31), between the first processor (11) and the first peripheral device (101), and between the second processor (31) and the second peripheral device (102) via the internal bus (10).

12. A method according to claim 10, **characterized in that**
the plurality of processors (11,31) include first and second processors (11,31),
the peripheral devices (101,102) include a video device (101) subordinate to the first processor (11), and a network device (102) subordinate to the second processor (31),
the internal bus (10) connects the first and second processors (11,31), connects the first processor (11) and the video device (101), connects the second processor (31) and the network device (102), and is shared between the first and second processors (11,31), and
video data processed by the video device (101) is transmitted between the first and second processors (11,31) by flow control, and the transmitted data is transmitted to an external device via the network device (102).

13. A method according to claim 12, **characterized in that** the first processor (11) variably controls a bit rate of the video data output from the video device (101) in accordance with a radio state of a radio transmission band of the network device (102) on the basis of the flow control.

14. A method according to claim 13, **characterized in that** the first processor (11) is connected to a system memory (14) which stores the video data to be transmitted to the second processor (31), and the first processor (11) variably controls the bit rate of the video data output from the system memory (14) in accordance with a state of the system memory (14).

15. A method according to claim 12, **characterized in that**
the first processor (11) is connected to a system memory (14) which stores the video data,
the video device (101) comprises
a receiver (21) which receives radio waves from an external terminal,
an encoder (23) which encodes a video signal received by the receiver (21) and transfers the encoded video data via the internal bus (10), and
a memory device (15) which stores the video data transferred from the encoder (23) via the internal bus (10), and wherein
the video data stored in the memory device (15) is transferred to the system memory (14) via the internal bus (10), and
the first processor (11) variably controls a bit rate of the video data output from the system memory (14) in accordance with a state of the system memory (14).

16. A method according to claim 12, **characterized in that**
the first processor (11) is connected to a system memory (14) which stores the video data,
the video device (101) comprises
a receiver (21) which receives radio waves from an external terminal,
an encoder (23) which encodes a video signal received by the receiver (21) and transfers the encoded video data via the internal bus (10), and
a memory device (15) which stores the video data transferred from the encoder (23), via the internal bus (10), and wherein
the video data encoded by the encoder (23) is transferred in real time to the system memory (14) via the internal bus (10), and
the first processor (11) variably controls a bit rate of the video data output from the system memory (14) in accordance with a state of the system memory (14).

17. A method according to claim 12, **characterized in that**
the second processor (31) is connected to a protocol stack memory (32),
the network device (102) comprises a radio communication device (36),
the second processor (31) reads out, via the internal bus (10), video data stored in the video device (101), stores the video data in the protocol stack memory (32), and transfers the video data to the radio communication device (36) via the internal bus (10), and
the first processor (11) is connected to a system memory (14) which stores the video data to be transmitted to the second processor (31), and the first processor (11) variably controls a bit rate of the video data output from the system memory (14) to the second processor (31) via the internal bus (10) in accordance with a state of the system memory (14).

18. A system configuration method **characterized by** comprising:
connecting a plurality of processors (11,31) and a plurality of peripheral devices (101,102) subordinate to the respective processors (11,31) to an internal bus (10) shared between the plurality of processors (11,31);
performing communication between the plurality of processors (11,31) and the plurality of peripheral devices (101,102) via the internal bus (10); and
performing communication between the plurality of processors (11,31) via the internal bus (10).

19. A method according to claim 18, **characterized in that**
the processors (11,31) include first and second processors (11,31),
the peripheral devices (101,102) include a video device (101) subordinate to the first processor (11), and a network device (102) subordinate to the second processor (31), and
video data processed by the video device (101) is transmitted between the first and second processors (11,31) via the internal bus (10) by flow control, and the transmitted data is transmitted to an external device via the network device (102).

20. A method according to claim 18, **characterized in that**
the processors (11,31) include first and second processors (11,31),
the peripheral devices (101,102) include a video device (101) subordinate to the first processor (11), and a radio data transmission device (36) subordinate to the second processor (31), and
video data processed by the video device (101) is transmitted between the first and second processors (11,31) via the internal bus (10) by flow control, and the transmitted data is transmitted by radio to an external device at a bit rate corresponding to a transmission band of the radio data transmission device (36).
